(19) Europäisches Patentamt
European Patent Office
Office européen des brevets

(11) **EP 2 359 458 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(21) Anmeldenummer: **09771681.5**

(22) Anmeldetag: **30.10.2009**

(51) Int Cl.:
*H02K 1/14* *(2006.01)*          *H02K 1/20* *(2006.01)*
*H02K 21/00* *(2006.01)*        *H02K 41/00* *(2006.01)*

(86) Internationale Anmeldenummer:
**PCT/DE2009/001556**

(87) Internationale Veröffentlichungsnummer:
**WO 2010/060409 (03.06.2010 Gazette 2010/22)**

(54) **ELEKTRISCHE MASCHINE**

ELECTRICAL MACHINE

MACHINE ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.11.2008 DE 102008054284**

(43) Veröffentlichungstag der Anmeldung:
**24.08.2011 Patentblatt 2011/34**

(73) Patentinhaber: **Feaam GmbH**
**85579 Neubiberg (DE)**

(72) Erfinder: **DAJAKU, Gurakuq**
**85579 Neubiberg (DE)**

(74) Vertreter: **Brand, Martin G.**
**Epping Hermann Fischer**
**Patentanwaltsgesellschaft mbH**
**Ridlerstraße 55**
**80339 München (DE)**

(56) Entgegenhaltungen:
**US-A1- 2005 285 451     US-B1- 6 476 524**
**US-B1- 6 664 696       US-B2- 6 849 985**

• **KOLLETSCHKE H-D: "Die modulare dauermagnetmaschine - Aufbau und Eigenschaften (The modular permanent magnet machine - Assembly and properties)" DISSERTATION VON DER FAKULTAET FUER ELEKTROTECHNIK DERUNIVERSITAET DER BUNDESWEHR MUENCHEN, XX, XX, 1. Januar 1987 (1987-01-01), Seiten 12-29,64, XP002301888**

**Beschreibung**

Die vorliegende Erfindung betrifft eine elektrische Maschine.

Üblicherweise umfassen elektrische Maschinen einen gehäusefesten Stator sowie einen Rotor, der relativ zum Stator beweglich ist. Der Rotor kann beispielsweise drehbar bezüglich des Stators gelagert oder linear dazu verschiebbar sein. Elektrische Maschinen werden den elektro-mechanischen Energiewandlern zugeordnet. Dabei können sie motorisch oder generatorisch arbeiten.

Beispielsweise können elektrische Maschinen zum Antrieb in Kraftfahrzeugen eingesetzt werden. Dabei und bei anderen Anwendungen kann es vorteilhaft sein, bestimmte Eigenschaften des Betriebsverhaltens der elektrischen Maschine zu erzielen. Dazu können das Drehmoment, die akustischen Eigenschaften, die Verluste im Eisen sowie die Verluste in Wicklungen und Verluste in Magneten zählen.

Statoren elektrischer Maschinen mit konzentrierten Wicklungen zeichnen sich durch kompaktes Design gegenüber solchen mit verteilten Wicklungen aus. Wicklungstypen, wie die Bruchlochwicklung, englisch fractional slot winding, erlauben unterschiedliche Kombinationen der Polpaarzahl und der Anzahl der Nuten. Als Polpaarzahl wird dabei die Anzahl der Polpaare im Rotor verstanden, während die Nuten im Stator zur Aufnahme der Wicklungen dienen.

Bei elektrischen Maschinen in Fahrzeugantrieben sind unter den Mehrphasenmaschinen diejenigen mit drei elektrischen Phasen am weitesten verbreitet. Eine Dreiphasenmaschine ist dabei an ein elektrisches Dreiphasensystem mit drei zueinander um jeweils 120° verschobenen Phasen anschließbar.

Jedes magnetische Polpaar im Rotor umfasst zwei magnetische Pole, einen Nordpol und einen Südpol.

Die Anzahl der Nuten pro Pol und pro Phase ist definiert als

$$q = Q_S/(2 \cdot p \cdot m),$$

wobei m die Anzahl der Phasen, $Q_S$ die Anzahl der Nuten und p die Anzahl der Polpaare im Rotor umfasst.

Als Arbeitswelle kommt bei Maschinen mit konzentrierten Wicklungen nicht notwendigerweise die Grundwelle zur Anwendung. Vielmehr kann es vorteilhaft sein, eine harmonische Komponente der magnetomotorischen Kraft, die von höherer Ordnung ist, als Arbeitswelle zu nutzen.

Beispielsweise in dem Dokument US 2007/0194650 A1 ist eine elektrische Maschine mit zwölf Nuten und zehn Polen beschrieben. Bei einer derartigen Maschine ist die vom Stator im Betrieb hervorgerufene magnetomotorische Kraft nicht gemäß einer einfachen Sinuswelle verteilt. Vielmehr wird bei einer Analyse der magnetomotorischen Kraft und ihrer harmonischen Komponenten, beispielsweise mit einer Fourier-Zerlegung, deutlich, dass zahlreiche unerwünschte harmonische Komponenten auftreten. Dabei sind jeweils alle harmonischen Komponenten außer derjenigen, die als Arbeitswelle der elektrischen Maschine genutzt wird, unerwünscht, da diese zu Verlusten führen können und zudem unerwünschte akustische Beeinträchtigungen verursachen können.

Der Begriff subharmonisch ist dabei vorliegend auf die Arbeitswelle bezogen.

Beispielsweise kann bei einer elektrischen Maschine mit einem Stator mit konzentrierten Wicklungen, wobei zwei nebeneinander liegende Zähne mit Spulen eines Strangs und entgegengesetztem Wicklungssinn versehen sind, die fünfte oder siebte Harmonische als Arbeitswelle genutzt werden. Hieraus ergibt sich in der Grundform eine Maschine mit zwölf Nuten und zehn Polen beziehungsweise mit zwölf Nuten und 14 Polen. Alle ganzzahligen Vielfachen der Anzahl der Nuten und der Anzahl der Pole sind hierbei ebenso möglich.

Die Arbeitswelle kann dabei auch als synchronisierte Komponente bezeichnet werden. Das Drehmoment einer elektrischen Maschine kann aus dem Strombelag, der Verteilung der magnetomotorischen Kraft und der Flussdichteverteilung berechnet werden.

Um ein zeitunabhängiges Drehmoment zu erzeugen, muss die Anzahl der Polpaare des Rotors bei der betrachteten Minimalsymmetrie mit der Ordnungszahl der Hauptwelle der magnetomotorischen Kraft bezogen auf diese Symmetrie zusammenfallen. Die erforderliche Symmetrie kann beispielsweise auf dem Viertelumfang oder dem halben Umfang einer rotierenden elektrischen Maschine gegeben sein.

In dem genannten Dokument US 2007/0194650 A1 ist eine Maßnahme zur Reduzierung der Subharmonischen bekannt. Dort wird jedoch jede Spule in zwei Spulen aufgeteilt und die so entstandenen Spulensysteme werden gegeneinander verschoben. Diese Maßnahme verkompliziert und verteuert jedoch Wicklungssystem und Maschine.

In dem Aufsatz Kolletschke H-D: "Die modulare Dauermagnetmaschine - Aufbau und Eigenschaften (The modular permanent magnet machine - Assembly and properties)" ist eine gattungsgemäße elektrische Maschine angegeben.

Die Dokumente US 6,849,985 B2 und US 6,664,696 B1 befassen sich mit der Reduzierung höherer Harmonischer.

Aufgabe der vorliegenden Erfindung ist es, eine Reduzierung der Subharmonischen bei einer elektrischen Maschine mit geringem Aufwand zu erzielen.

Erfindungsgemäß wird die Aufgabe gelöst durch eine elektrische Maschine mit den Merkmalen der unabhängigen Patentansprüche. Ausgestaltungen und Weiterbildungen sind in den abhängigen Patentansprüchen angegeben.

Die elektrische Maschine umfast einen Stator und einen relativ dazu beweglichen Rotor. Der Stator umfasst Nuten zur Aufnahme elektrischer Wicklungen. Eine Arbeitswelle der magnetomotorischen Kraft im Betrieb ist verschieden von einer Grundwelle des Magnetflusses. Dabei ist in mindestens einem Statorabschnitt eine mechanische Barriere für diese Grundwelle des Magnetflusses vorgesehen.

Unter Magnetfluss kann der Magnetfluss im Stator und/oder im Luftspalt zwischen Stator und Rotor verstanden sein.

Die mechanische Barriere ist dabei derart ausgebildet, dass die Grundwelle geschwächt wird, während die Arbeitswelle im Wesentlichen unbeeinflusst oder nur gering beeinflusst bleibt. Die mechanische Barriere behindert die Ausbildung der Grundwelle. Die Grundwelle ist dabei als Subharmonische bezüglich der Arbeitswelle verstanden.

Die mit dem vorgeschlagenen Prinzip erzielte signifikante Reduzierung der Subharmonischen kann allein durch mechanische Maßnahmen im Stator erzielt werden.

Dabei können, müssen aber nicht notwendigerweise, weitere Maßnahmen im Rotor und/oder der Wicklung hinzutreten.

In einer Ausführungsform ist der Stator als Stator mit konzentrierten Wicklungen ausgebildet, wobei zwei nebeneinander liegende Zähne des Stators, die jeweils zwischen benachbarten Nuten des Stators gebildet sind, mit Spulen eines Strangs und entgegengesetztem Wicklungssinn versehen sind.

In einer Ausführungsform wird von einer konzentrierten Wicklung ausgegangen, die um je einen Zahn des Stators gewickelt ist. Dabei braucht nicht jeder Zahn des Stators eine Wicklung tragen.

In einer Ausführungsform ist der mindestens eine Abschnitt des Stators zwischen zwei Bereichen des Stators angeordnet, die mit Spulen eines gemeinsamen Stranges einer Statorwicklung der elektrischen Maschine bewickelt sind. Unterschiedliche Stränge sind dabei unterschiedlichen elektrischen Phasen einer Mehrphasenwicklung zugeordnet. Beispielsweise können drei Stränge bei einer Dreiphasenwicklung vorgesehen sein.

In einer Ausführungsform sind mehrere mechanische Barrieren im Stator vorgesehen.

Die mehreren mechanischen Barrieren sind bevorzugt regelmäßig am Umfang des Stators verteilt, sofern eine rotierende Maschine vorgesehen ist. Bei einer Linearbewegung des Rotors bezüglich des Stators können die mechanischen Barrieren äquidistant entlang einer Geraden angeordnet sein. Beispielsweise können bei einer Maschine mit zwölf Nuten und zehn oder 14 Polen sechs mechanische Barrieren regelmäßig entlang des Umfangs verteilt sein, das bedeutet, im Abstand von 60° zueinander je eine mechanische Barriere.

Bei ganzzahligen Vielfachen, also ganzzahligen Vielfachen von zwölf Nuten und gleichen ganzzahligen Vielfachen von zehn oder 14 Polen, sind vorzugsweise entsprechende ganzzahlige Vielfache von sechs regelmäßig am Umfang verteilten mechanischen Barrieren für die Grundwelle vorgesehen.

Die mechanische Barriere kann beispielsweise als Verringerung des Jochquerschnitts eines Statorblechpakets des Stators ausgebildet sein.

Die Reduzierung des Jochquerschnitts des Stators kann auf mehrere Arten erfolgen.

Beispielsweise kann die mechanische Barriere dadurch ausgebildet sein, dass eine im Bereich der mechanischen Barriere ohnehin vorhandene Nut im Stator gegenüber den Nuten des Stators, die nicht in einem Abschnitt mit mechanischer Barriere liegen, vertieft ist. Vorzugsweise ist beispielsweise jede zweite Nut tiefer ausgebildet.

In einer Ausführungsform ist die Nut zwischen zwei Bereichen des Stators, die mit Spulen eines gemeinsamen Stranges bewickelt sind, vertieft ausgebildet. Die beiden äußeren Nuten dieses Bereichs, der mit Spulen eines Stranges bewickelt ist, sind dabei nicht vertieft ausgebildet.

In einer Ausführungsform sind die vertieft ausgebildeten Nuten jeweils so tief ausgebildet, dass eine Unterbrechung des Stators resultiert. Beispielsweise ist der Stator jeweils zwischen zwei Bereichen des Stators unterbrochen, die mit Spulen eines gemeinsamen Stranges bewickelt sind.

Alternativ oder zusätzlich kann an einer den Nuten gegenüberliegenden Seite des Stators der Jochquerschnitt reduziert sein. Dies kann bei einer rotierenden Maschine beispielsweise durch Abflachung eines kreisrunden Umfangs erfolgen. Alternativ oder zusätzlich können an der dem Rotor abgewandten Seite des Stators zusätzliche Nuten eingefügt sein.

In einer weiteren Ausführungsform kann der Jochquerschnitt durch Einfügen von Löchern im Jochbereich reduziert sein.

Beispielsweise kann die mechanische Barriere durch die beschriebenen beispielhaften Ausführungen in dem mindestens einen Abschnitt des Stators um 50% oder mehr geschwächt sein gegenüber einer Ausführung ohne diese mechanischen Barrieren.

Die mechanische Barriere kann derart ausgebildet sein, dass bei Nenndrehmoment der elektrischen Maschine die Grundwelle in dem mindestens einen Abschnitt des Stators um mindestens 50% gegenüber einer herkömmlichen elektrischen Maschine ohne diese zusätzlichen mechanischen Barrieren geschwächt ist, wobei die Arbeitswelle in diesem Bereich um weniger als 5% geschwächt ist.

Die mechanische Barriere kann in einer alternativen Ausführung derart ausgebildet sein, dass bei Nenndrehmoment der elektrischen Maschine die Grundwelle in dem mindestens einen Abschnitt des Stators um mindestens 90% gegenüber einer herkömmlichen elektrischen Maschine ohne diese zusätzlichen mechanischen Barrieren geschwächt ist, wobei die Arbeitswelle in diesem Bereich um weniger als 10% geschwächt ist.

In die zusätzliche Vertiefung der rotorseitigen Nuten kann beispielsweise ein Kühlkanal eingebracht sein. Hierdurch ist mit zusätzlichem Vorteil eine Kühlung der elektrischen Maschine im Betrieb möglich.

Es ist alternativ oder zusätzlich möglich, ohne eine geometrische Reduzierung des Jochquerschnitts ebenfalls eine mechanische Barriere zu erzielen. Hierzu kann beispielsweise der Jochquerschnitt für die Flussführung in Umfangsrichtung effektiv verringert werden. Dabei können beispielsweise Flussleitstücke eingesetzt sein, die in Umfangsrichtung schlecht leiten, in axialer und/oder in radialer Richtung aber gut leiten.

Beispielsweise kann die mechanische Barriere ein Blechpaket umfassen, welches eine andere Vorzugsrichtung als ein herkömmlich vorgesehenes Blechpaket des Stators aufweist.

Alternativ oder zusätzlich kann die mechanische Barriere in dem mindestens einen Abschnitt des Stators ein anderes Material als das Material des Stators außerhalb dieses mindestens einen Abschnitts umfassen. Beispielsweise kann dieses Material ein gesintertes Eisen oder SMC, Soft Magnetic Composites, umfassen.

Selbstverständlich können auch zwei, drei oder mehr der genannten Ausführungen der mechanischen Barrieren miteinander in einer elektrischen Maschine kombiniert sein.

Eine mögliche Grundform der Wicklung der vorgeschlagenen elektrischen Maschine umfasst eine konzentrierte Wicklung, bei der zwei nebeneinander liegende Zähne des Stators, die je zwischen zwei benachbarten Nuten gebildet sind, jeweils mit konzentrierten Spulen bewickelt sind. Diese Spulen gehören jeweils zu einem gemeinsamen Strang und rufen einen Magnetfluss in unterschiedlicher Richtung hervor.

Der gesamte Stator kann eine oder mehrere solcher Grundformen eines Stranges nebeneinander aufweisen.

Der Stator kann ein oder mehrere derartiger Strangabfolgen nebeneinander aufweisen, vorzugsweise sind alle Stränge gleich aufgebaut.

Das Statorblechpaket des gesamten Stators kann aus einem Stück gefertigt oder segmentiert aufgebaut sein.

Das Verhältnis der Anzahl der Nuten zur Anzahl der Pole im Rotor kann beispielsweise 12:10 betragen. Alternativ kann das Verhältnis beispielsweise 12:14 betragen. Alternativ können jeweils ganzzahlige Vielfache der Anzahl der Nuten und der Anzahl der Pole bei den genannten Verhältnissen vorgesehen sein.

Der Stator weist bevorzugt eine Dreiphasenwicklung auf. Somit ist die derart ausgestaltete elektrische Maschine an ein elektrisches Dreiphasensystem anschließbar. Alternativ sind auch 2, 4, 5 oder mehr Phasen bzw. Stränge möglich.

Alternativ oder zusätzlich kann die elektrische Maschine einen der folgenden Typen umfassen: Linearmaschine, Axialflussmaschine, Radialflussmaschine, Asynchronmaschine, Synchronmaschine.

Die elektrische Maschine kann als Maschine mit Innenläufer oder als Maschine mit Außenläufer aufgebaut sein.

Der Rotor der vorgeschlagenen elektrischen Maschine kann beispielsweise von einem der folgenden Typen sein: Käfigläufer, Mehrschichtrotor im Falle der Asynchronmaschine oder im Falle der Synchronmaschine Permanentmagnetrotor, Rotor mit vergrabenen Magneten oder ein elektrisch gespeister Rotor wie beispielsweise Vollpolrotor, Schenkelpolrotor, Heteropolar-Rotor, Homopolar-Rotor.

Eine Permanentmagnetmaschine kann dabei mit Oberflächenmagneten oder mit eingelassenen oder vergrabenen Magneten ausgebildet sein. Die Maschine kann als Synchronmaschine oder Asynchronmaschine mit Käfigläufer, Massivläufer oder Mehrschichtläufer ausgebildet sein.

In einer Ausführungsform des vorgeschlagenen Prinzips ist ein Teil der Nuten des Stators tiefer als die übrigen Nuten im Stator. Damit kann der Jochquerschnitt in diesem Bereich maßgeblich verkleinert sein, beispielsweise um mindestens 10 %.

Vorzugsweise wird jede zweite Nut im Stator entlang einer Hauptrichtung des Rotors tiefer ausgebildet.

Bei einer Maschine mit zwölf Nuten im Stator können beispielsweise sechs dieser Nuten, nämlich jede zweite, tiefer ausgebildet sein. Bei einer Maschine mit einem ganzzahligen Vielfachen von zwölf Nuten können entsprechend ganzzahlige Vielfache von sechs dieser Nuten, die bevorzugt regelmäßig entlang des Umfangs verteilt sind, vertieft ausgebildet sein.

Damit können folgende Vorteile erzielt werden:

Die beschriebene Wicklungsform erzeugt eine Felderregerkurve, bei der die Grundwelle nicht die maximale Amplitude besitzt. Das bedeutet jedoch, dass die Arbeitswelle der Maschine eine höhere Harmonische ist und die Grundwelle Verluste erzeugt. Verkleinert man den Jochquerschnitt wie oben beschrieben an mehreren Stellen deutlich, so kann sich die Grundwelle nur noch gedämpft ausbreiten und die Verluste durch die Grundwelle werden somit reduziert. Die Ausbreitung der Arbeitswelle wird hierdurch nicht oder nur unwesentlich beeinflusst.

Durch das Nutenquerfeld der elektrischen Maschine werden in den Leitern der Wicklungen einer Nut zusätzliche Verluste erzeugt. Diese Verluste entstehen insbesondere bei hohen Frequenzen in der Nähe der Nutöffnung. Ist nun ein Teil der Nuten tiefer, so kann dies auf verschiedene Arten genutzt werden:

In den tieferen Nuten kann die eigentliche Wicklung in den Nutgrund verlegt werden. Als Nutgrund ist dabei das dem Rotor abgewandte Ende der Nut bezeichnet. Der Nutgrund kann eine flächenhafte Ausdehnung haben. Der für die Verlustentstehung kritische Bereich in der Nähe der Nutöffnungen kann frei bleiben.

Zusätzlich kann dieser von Wicklungen freie Teil in der Nut für die Kühlung der Maschine genutzt werden. Beispielsweise kann eine Luft- oder Flüssigkeitskühlung vorgesehen sein. Bei Flüssigkeitskühlung bestehen die Flüssigkeit führenden Kühlkanäle vorzugsweise aus elektrisch schlecht oder nicht leitendem Material.

Bleibt in den tieferen Nuten der Nutgrund wicklungsfrei, so kann die Kühlung im Nutgrund erfolgen.

Eine oder mehrere der vorgenommenen Maßnahmen können miteinander kombiniert sein.

In einer weiteren Ausgestaltung ist jeder zweite Zahn des Stators so gestaltet, dass die Flussführung in Bewegungsrichtung des beweglichen Teils der elektrischen Maschine, also beispielsweise in Umfangsrichtung bei Radialflussmaschinen, behindert wird. Dies kann zum Beispiel durch eine andere Blechungsrichtung oder durch Verwendung von gesintertem Eisenmaterial erfolgen. Diese Maßnahme der Zahngestaltung kann auch mit den zum Teil tiefer ausgeführten Nuten kombiniert werden.

In einer anderen Ausführungsform kann die mechanische Barriere in mindestens einem Abschnitt des Stators derart ausgebildet sein, dass der für die Grundwelle wirksame magnetische Widerstand in Bewegungsrichtung erhöht ist. Dabei bleibt der für die Arbeitswelle wirksame magnetische Widerstand praktisch unbeeinflusst.

Die Erfindung wird nachfolgend an mehreren Ausführungsbeispielen anhand der Figuren näher erläutert. Dabei bezeichnen gleiche Bezugszeichen gleiche oder gleich wirkende Teile.

Es zeigen:

Figur 1     ein Ausführungsbeispiel mit konzentrischen Spulen um nebeneinander liegende Zähne des Stators,

Figur 2     ein erstes Ausführungsbeispiel nach dem vorgeschlagenen Prinzip mit vertieften Nuten,

Figur 3     eine Weiterbildung von Figur 2 mit Kühlkanal,

Figur 4     eine andere Weiterbildung von Figur 2 mit Kühlkanal an einem Beispiel,

Figur 5     ein Ausführungsbeispiel einer Kombination der Kühlkanäle von Figuren 3 und 4,

Figur 6     ein Ausführungsbeispiel mit Blechpaket,

Figur 7     ein Ausführungsbeispiel mit gesintertem Eisen,

Figur 8     ein Ausführungsbeispiel mit Bohrung im Stator,

Figur 9     ein Ausführungsbeispiel mit zusätzlicher Nut im Stator,

Figur 10     eine Weiterbildung von Figur 6,

Figur 11     ein Ausführungsbeispiel einer elektrischen Maschine mit zwölf Nuten und zehn Polen,

Figur 12     das Schaubild der magnetomotorischen Kraft über der Winkelposition in RAD zu Figur 11,

Figur 13     das Schaubild der magnetomotorischen Kraft anhand einer Zerlegung in Fourier-Komponenten,

Figur 14     ein Ausführungsbeispiel einer elektrischen Maschine mit vertieften Nuten nach dem vorgeschlagenen Prinzip

Figur 15     das Schaubild der magnetomotorischen Kraft über der Winkelposition in RAD zu der Ausführung von Figur 14,

Figur 16     das Schaubild der magnetomotorischen Kraft anhand einer Zerlegung in Fourier-Komponenten zu der Ausführung von Figur 14 und

Figur 17     einen Vergleich der Schaubilder der jeweiligen Zerlegung der magnetomotorischen Kraft von Figuren 13 und 16.

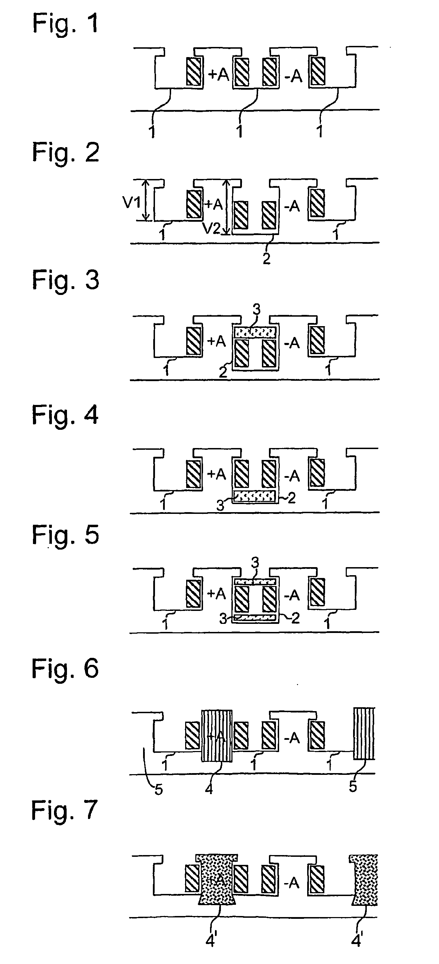

Figur 1 zeigt ein Ausführungsbeispiel eines Ausschnitts eines Stators einer elektrischen Maschine. Diese ist als Linearmotor realisiert. Der Rotor ist nicht eingezeichnet.

Man erkennt, dass nebeneinander liegende Zähne mit je einer konzentrierten Spule bewickelt sind. Diese Spulen sind Teil eines gemeinsamen Strangs A. Da die beiden Spulen einen unterschiedlichen Wicklungssinn aufweisen, rufen sie einen Magnetfluss in unterschiedlicher Richtung hervor. Diese Spulen sind daher mit +A, -A bezeichnet. Der gesamte Stator besteht in diesem Beispiel aus drei Strängen A, B, C, wobei die beiden weiteren Stränge B und C hier nicht eingezeichnet sind. Hierdurch ergibt sich eine konzentrierte Wicklung.

Der gesamte Stator kann eine oder mehrere solcher Grundformen eines Strangs nebeneinander aufweisen. Hierdurch ergibt sich beispielsweise die Wicklungstopologie +A, -A oder +A, -A, +A, -A. Der gesamte Stator kann ein oder mehrere Strangabfolgen nebeneinander aufweisen, also zum Beispiel +A, -A, -B, +B, +C, -C, -A, +A, +B, -B, -C, +C. Vorzugsweise sind alle Stränge jeweils gleich aufgebaut. Jeder Strang ist dabei einer elektrischen Phase eines elektrischen Mehrphasensystems zugeordnet, an welches die elektrische Maschine anschließbar ist.

Bei dem Beispiel gemäß Figur 1 weisen alle Nuten 1 die gleiche Nuttiefe auf.

Figur 2 zeigt ein Ausführungsbeispiel eines Ausschnitts aus einem Stator nach dem vorgeschlagenen Prinzip. Ausgehend von Figur 1 ist bei Figur 2 jede zweite Nut 2 tiefer ausgebildet. Dabei sind die Nuten 2 mit einer Vertiefung V2 ausgebildet, die signifikant größer ist als die Vertiefung V1 der Nuten 1. Die tieferen Nuten 2 führen dabei in diesem jeweiligen Bereich des Stators zu einem um 50 % verringerten Jochquerschnitt des im Bereich der Nut verbleibenden Statormaterials. In diesem Beispiel ist jede zweite Nut 2 tiefer ausgeführt. Der Stator gemäß Figur 2 ist in diesem Beispiel als Statorblechpaket ausgebildet und kann aus einem Stück gefertigt oder segmentiert aufgebaut sein.

Die vertieften Nuten 2 sind jeweils zwischen Abschnitten des Stators angeordnet, die benachbarte Zähne aufweisen, welche mit Wicklungen des gleichen Stranges bewickelt sind. Nuten 1 zwischen Abschnitten des Stators, die benachbarte Zähne aufweisen, welche mit Wicklungen unterschiedlicher Stränge bewickelt sind, haben im Vergleich dazu eine geringere, herkömmliche Tiefe V1.

Die Verkleinerung des Jochquerschnitts an mehreren Stellen, nämlich im Bereich der vertieften Nuten 2 führt dazu, dass sich die Grundwelle nur noch gedämpft ausbreiten kann. Dadurch werden die Verluste durch die Grundwelle reduziert. Die Ausbreitung der Arbeitswelle hingegen, beispielsweise der fünften oder siebten Harmonischen der Fourier-Zerlegung der magnetomotorischen Kraft, wird praktisch unbeeinflusst erhalten.

Zusätzlich ist in dem Beispiel gemäß Figur 2 bei den tieferen Nuten 2 die Wicklung in den Nutgrund verlegt. Hierdurch ergibt sich der zusätzliche Vorteil, dass der für Verlustentstehung kritischere Bereich in der Nähe der Nutöffnungen frei bleiben kann. Derartige Verluste entstehen insbesondere bei hohen Frequenzen.

Figur 3 zeigt eine Weiterbildung des Statorausschnitts von Figur 2. Die Ausführung gemäß Figur 3 entspricht derjenigen von Figur 2 weitgehend. Zusätzlich zur Figur 2 ist jedoch im Bereich der Nutöffnung ein Kühlkanal 3 bei den tieferen Nuten 2 eingebracht. Der Kühlkanal kann für Luft- oder Flüssigkeitskühlung genutzt werden.

Figur 4 zeigt eine andere Weiterbildung von Figur 2. Im Gegensatz zu Figur 2 ist bei der Ausführung gemäß Figur 4 die Wicklung in den tieferen Nuten 2 nicht in den Nutgrund verlegt. Vielmehr ist die Wicklung wie bei Figur 1 angeordnet. Hierdurch bleibt der Nutgrund der tieferen Nuten wicklungsfrei. Dieser zusätzlich gewonnene Raum im Nutgrund der tieferen Nuten 2 kann dazu benutzt werden, Kühlkanäle 3 im Nutgrund vorzusehen.

Figur 5 zeigt an einem Ausführungsbeispiel eine Kombination von Kühlkanälen im Bereich der Nutöffnung und im Bereich des Nutgrundes bei den tieferen Nuten 2. Somit sind bei Figur 5 die Ausführungen der Kühlkanäle gemäß Figuren 3 und 4 im Bereich der Nutöffnung und im Bereich des Nutgrundes bei den tieferen Nuten miteinander kombiniert. Die Wicklung in den tieferen Nuten 2 befindet sich dabei weder unverändert im Bereich der Nutöffnung noch vollständig verlegt in den Nutgrund, sondern in der Mitte zwischen beiden Positionen.

Figur 6 zeigt eine andere Ausführungsform einer mechanischen Barriere für die Grundwelle in mindestens einem Abschnitt des Stators. Anstelle vertiefter Nuten 2, wie in Figuren 2 bis 5 dargestellt, ist bei Figur 6 jeder zweite Zahn 4 nicht mit dem herkömmlichen Statormaterial ausgebildet, sondern weist ein Blechpaket auf. Das Blechpaket erstreckt sich über den Nutgrund der mit herkömmlicher Tiefe ausgebildeten Nuten 1 hinaus in den Bereich des Joches hinein. Gegenüber dem häufig als Statorblechpaket ausgeführten übrigen Statorbereich ist im Bereich der Zähne 4 die Blechung in eine andere Richtung ausgebildet. Die Blechung im Bereich der Zähne 4 weist im vorliegenden Beispiel eine Flächennormale in Rotor-Bewegungsrichtung auf. Die zwischen den derart veränderten Zähnen 4 liegenden Zähne 5 sind unverändert.

Figur 7 zeigt eine Alternative zu der Ausführung von Figur 6. Die veränderten Zähne 4, die bei Figur 7 das Bezugszeichen 4' tragen, sind hier nicht mit einem Statorblechpaket anderer Vorzugsrichtung ausgeführt, sondern unterscheiden sich im gewählten Material vom übrigen Stator. Im Bereich der Zähne 4' ist ein gesintertes Eisenmaterial verwendet. Die Zähne 4', also jeder zweite Zahn im Ausführungsbeispiel gemäß Figur 7, umfassen dieses gesinterte Eisenmaterial. Die übrigen Zähne 5 sind wie bei Figur 6 unverändert.

In nicht gezeigten Ausführungen können die Maßnahmen bei den Zähnen gemäß Figuren 6 und 7 auch mit den vertieften Nuten 2, wie beispielhaft anhand von Figur 2 bis 5 gezeigt, kombiniert werden.

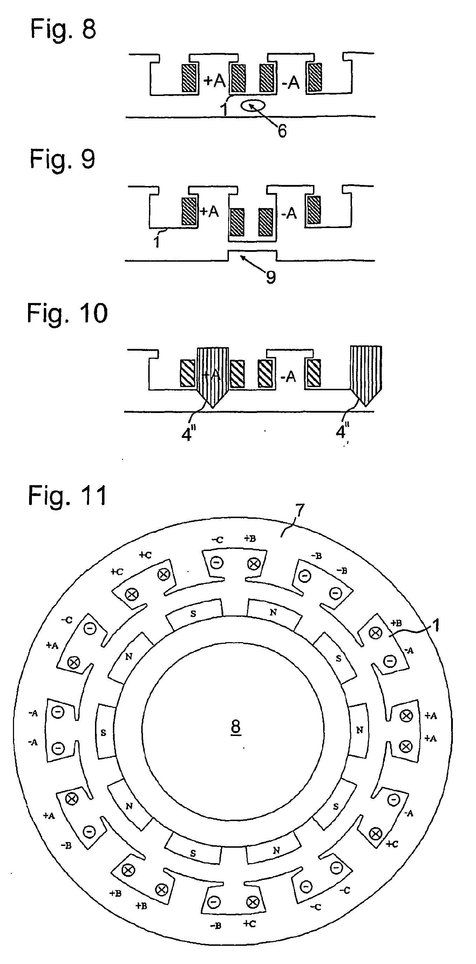

Figur 8 zeigt eine alternative Ausführungsform zu der Ausführung gemäß Figur 2.

Anstelle vertiefter Nuten 2 wie beispielhaft anhand von Figuren 2 bis 5 gezeigt ist bei der Ausführung von Figur 8 eine mechanische Barriere für die Grundwelle des Magnetflusses in einem Abschnitt des Stators durch eine Bohrung 6 verwirklicht. Die Bohrung verläuft dabei in demjenigen Jochbereich, der bei Figur 2 eine vertiefte Nut aufweist. Die Bohrung verläuft bei Ausführung als rotierende Maschine in axialer Richtung. Allgemein verläuft die Bohrung parallel zum Nutgrund der Nuten 1, 2.

In alternativen Ausführungen kann anstelle einer Bohrung mit rundem Querschnitt ein elliptischer oder eckiger Querschnitt vorgesehen sein. Selbstverständlich sind auch andere Querschnitte im Rahmen des vorgeschlagenen Prinzips möglich, beispielsweise dreieckige Querschnitte.

Figur 9 zeigt eine weitere Alternative zu der Ausführung von Figur 2. Anstelle vertiefter Nuten 2 wie beispielhaft anhand von Figuren 2 bis 5 gezeigt ist bei der Ausführung von Figur 9 je eine zusätzliche Nut 9 auf einer dem Rotor abgewandten Seite des Stators vorgesehen. Die Nut 9 ist in demjenigen Jochbereich angeordnet, der bei Figur 2 eine vertiefte Nut aufweist. In der Ausführung von Figur 9 fluchtet die zusätzliche Nut 9 mit der auf der rotorseitig in diesem Bereich vorgesehenen Nut 1.

Figur 10 zeigt eine Weiterbildung der mechanischen Barriere gemäß Figur 6. Bei Figur 10 ist ebenfalls jeder zweite Zahn 4" so ausgebildet, dass der Zahn ein Statorblechpaket umfasst. Die einzelnen Bleche sind dabei jedoch unterschiedlich lang. Im Bereich des Joches ist kein rechteckiger Querschnitt vorgesehen, sondern im Stator in der Draufsicht eine pfeilförmige Verjüngung in Richtung der vom Rotor abgewandten Seite des Stators. Hierdurch ergibt sich eine zusätzliche Barrierewirkung für die Grundwelle im Bereich des Joches derjenigen Zähne 4", die mit dem Blechpaket in anderer Vorzugsrichtung gegenüber dem Statorblechpaket ausgeführt sind. Der Statorfluss bezüglich der Grundwelle wird dadurch weiter reduziert.

Figur 11 zeigt ein Ausführungsbeispiel einer rotierenden elektrischen Maschine mit einem Stator 7 und einem Rotor 8. Der Stator weist zwölf Nuten 1 auf. Die Wicklungen +A, -A, +B, -B, +C, -C einer Dreiphasenwicklung sind als konzentrierte Wicklungen um je einen Zahn des Stators gewickelt. Der Rotor 8 umfasst zehn Pole, die mit Permanentmagneten auf dem Rotor aufgebracht realisiert sind. Je fünf Nord- und je fünf Südpole N, S wechseln sich dabei ab.

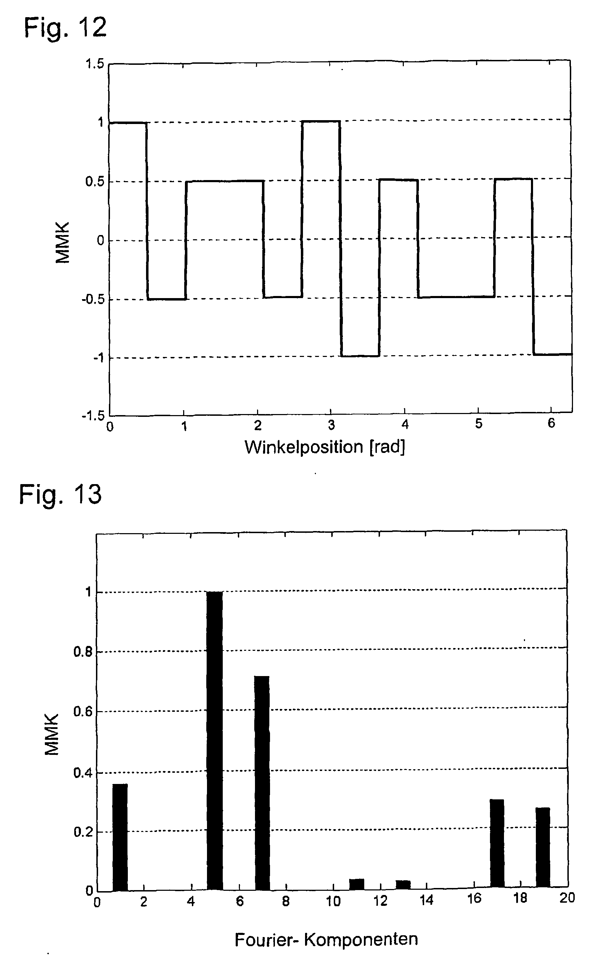

Figuren 12 und 13 zeigen anhand beispielhafter Diagramme die magnetomotorische Kraft aufgetragen über der Winkelposition in rad bei Figur 12 beziehungsweise über den Fourier-Komponenten einer entsprechenden Zerlegung bei Figur 13. Man erkennt, dass bei einer derartigen Maschine insbesondere die Grundwelle, also die Fourier-Komponente erster Ordnung, die hier eine Subharmonische bezüglich der Arbeitswelle darstellt, nämlich der fünften harmonischen Komponente, signifikant ist.

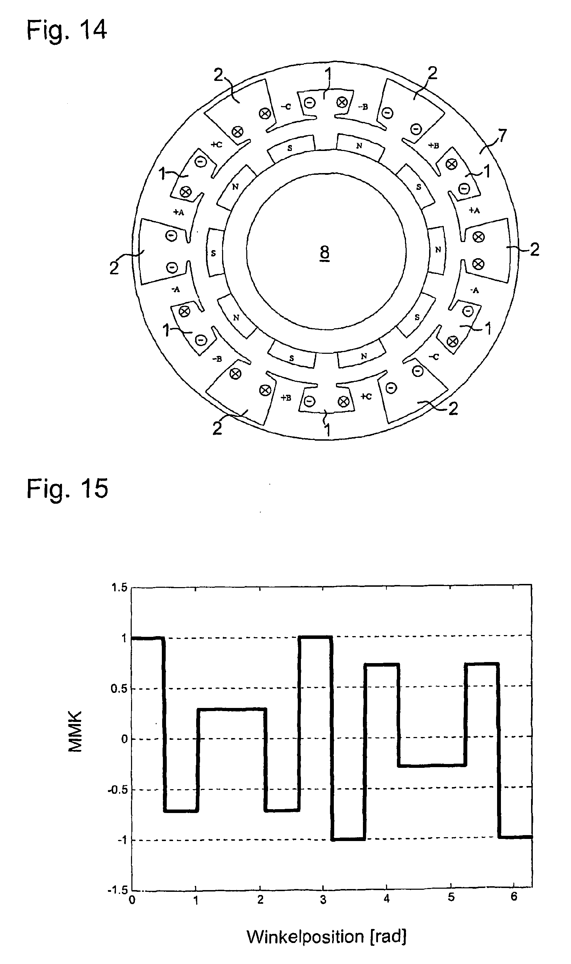

Figur 14 zeigt ein Ausführungsbeispiel einer rotierenden elektrischen Maschine nach dem vorgeschlagenen Prinzip, bei der die anhand von Figur 13 beschriebene Grundwelle signifikant reduziert ist. Hierfür ist bei der Ausführung gemäß Figur 14 jede zweite Nut tiefer ausgebildet. Die tieferen Nuten sind mit Bezugszeichen 2 versehen, während die Nuten herkömmlicher und damit geringerer Tiefe, wie bei Figur 11, mit Bezugszeichen 1 versehen sind. Die Wicklungstopologie von Figur 11 ist bei Figur 14 erhalten.

Man erkennt, dass bei Figur 14 insgesamt sechs Nuten 2 der zwölf Nuten 1, 2 tiefer ausgebildet sind. Der Jochquerschnitt verringert sich auf unter 50% gegenüber dem Jochquerschnitt bei den herkömmlichen Nuten 1.

Bei einer Maschine mit insgesamt zwölf Nuten und zehn Polen ist damit an sechs regelmäßig am Umfang des Stators verteilten Abschnitten des Stators eine mechanische Barriere für die Grundwelle gebildet. Die mechanische Barriere ist dabei durch den verringerten Jochquerschnitt zwischen der vertieften Nut 2 und der entsprechenden, vom Rotor abgewandten Seite des Stators gebildet. Dies führt dazu, dass die Ausbreitung der Grundwelle wirksam und signifikant reduziert ist, während die Arbeitswelle, also hier die fünfte Harmonische, praktisch unverändert bleibt.

Der für die Grundwelle wirksame magnetische Widerstand wird im Jochbereich der vertieften Nuten in Bewegungsrichtung erhöht. Der für die Arbeitswelle wirksame magnetische Widerstand bleibt dabei praktisch unbeeinflusst.

Die tieferen Nuten sind dabei zwischen Wicklungen im gleichen Strang mit unterschiedlichem Wicklungssinn vorgesehen, nicht jedoch zwischen unterschiedlichen Strängen der elektrischen Wicklung. Gerade dort ist die Tiefe der Nut bezüglich Figur 11 unverändert. Durch diese Anordnung der vertieften Nuten wird die Grundwelle beeinflusst, die Arbeitswelle jedoch praktisch nicht.

Dabei ist zu beachten, dass das Joch im Bereich der tieferen Nuten 2 nicht magnetisch wirksam unterbrochen ist, sondern lediglich geschwächt. Eine wirksame Unterbrechung würde auch das Wandern der Nutzfelder schwächen. Bei der Ausführung von Figur 14 ist beispielsweise die Grundwelle um 90% geschwächt, die Arbeitswelle jedoch nur unter 5%. Diese Zahlen gelten bei Nennmoment der elektrischen Maschine im Betrieb.

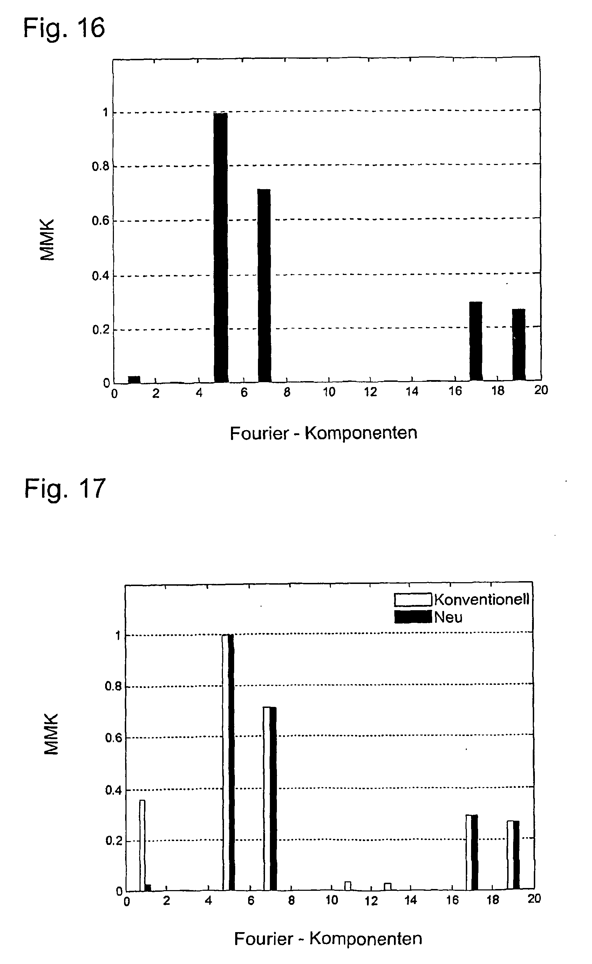

Figuren 15 bis 17 veranschaulichen die Vorteile der Ausführung von Figur 14 anhand der jeweiligen Schaubilder der Magnetomotorischen Kraft aufgetragen über der Winkelposition gemäß Figur 15, über den Fourier-Komponenten von Figur 16 sowie anhand eines Vergleichs der Diagramme von Figur 13 und Figur 16.

Bezugszeichenliste

| 1 | Nut |
| 2 | vertiefte Nut |
| 3 | Kühlkanal |
| 4 | Blechpaket |
| 4' | gesintertes Eisen |
| 4" | Blechpaket |
| 5 | Zahn |
| 6 | Bohrung |
| 7 | Stator |
| 8 | Rotor |
| 9 | zusätzliche Nut |
| A | Wicklung |
| B | Wicklung |
| C | Wicklung |
| + | Wicklungssinn, positiv |

- Wicklungssinn, negativ

**Patentansprüche**

1. Elektrische Maschine,

   - die einen Stator (7), der Nuten (1, 2) zur Aufnahme elektrischer Wicklungen (+A, -A) aufweist, und
   - einen relativ zum Stator (7) beweglichen Rotor (8) umfasst,
   - bei der im Betrieb eine Arbeitswelle der magnetomotorischen Kraft verschieden von einer Grundwelle des Magnetflusses ist, **dadurch gekennzeichnet, dass** in mindestens einem Abschnitt des Stators eine mechanische Barriere für die Grundwelle des Magnetflusses vorgesehen ist, wobei die mechanische Barriere derart ausgebildet ist, dass die Grundwelle geschwächt wird, während die Arbeitswelle im Wesentlichen unbeeinflusst bleibt, und wobei die mechanische Barriere als geometrische Verringerung des Jochquerschnitts des Stators und/ oder als effektive Verringerung des Jochquerschnitts für die Flussführung in Umfangsrichtung ausgebildet ist.

2. Elektrische Maschine nach Anspruch 1, bei der die mechanische Barriere eine Nut (2) im Stator umfasst, die zwischen zwei Bereichen des Stators (7), die mit Spulen eines gemeinsamen Stranges (A, B, C) einer Statorwicklung der elektrischen Maschine bewickelt sind, angeordnet ist, mittels Vertiefen der Nut (2) auf eine Tiefe V2, wohingegen eine Nut (1) zwischen Bereichen des Stators, die mit Spulen verschiedener Stränge bewickelt sind, im Vergleich dazu eine geringere, herkömmliche Tiefe V1 aufweist.

3. Elektrische Maschine nach Anspruch 1 oder 2, bei der die mechanische Barriere derart ausgebildet ist, dass die Grundwelle in dem mindestens einen Abschnitt des Stators (7) um 50% oder mehr geschwächt ist.

4. Elektrische Maschine nach Anspruch 1 oder 2, bei der die mechanische Barriere derart ausgebildet ist, dass bei Nenndrehmoment die Grundwelle in dem mindestens einen Abschnitt des Stators um mindestens 90% geschwächt ist, wobei die Arbeitswelle in diesem Bereich um weniger als 10% geschwächt ist.

5. Elektrische Maschine nach Anspruch 2, bei der die Nut (2) auf einer dem Rotor (8) zugewandten Seite des Stators (7) vorgesehen ist.

6. Elektrische Maschine nach Anspruch 2, bei der die Nut (9) auf einer dem Rotor (8) abgewandten Seite des Stators (7) vorgesehen ist.

7. Elektrische Maschine nach einem der Ansprüche 5 bis 6, bei der in die Nut (2) ein Kühlkanal (3) eingebracht ist.

8. Elektrische Maschine nach einem der Ansprüche 1 bis 7, bei der die mechanische Barriere eine Bohrung (6) im Stator umfasst.

9. Elektrische Maschine nach einem der Ansprüche 1 bis 8, bei der die mechanische Barriere ein Blechpaket (4) umfasst, welches eine andere Vorzugsrichtung als ein Blechpaket des Stators umfasst.

10. Elektrische Maschine nach einem der Ansprüche 1 bis 9, bei der die mechanische Barriere (4') in dem mindestens einen Abschnitt des Stators ein anderes Material als das Material des Stators außerhalb dieses mindestens einen Abschnitts umfasst.

11. Elektrische Maschine nach einem der Ansprüche 1 bis 10, bei der die mechanische Barriere (4') gesintertes Eisen oder SMC, Soft Magnetic Composites, umfasst.

12. Elektrische Maschine nach einem der Ansprüche 1 bis 11, bei der das Verhältnis der Anzahl der Nuten (1, 2) zur Anzahl der Pole (S, N) im Rotor 12/10 oder 12/14 oder jeweils ganzzahlige Vielfache der Anzahl der Nuten (1, 2) und der Anzahl der Pole (S, N) beträgt.

13. Elektrische Maschine nach einem der Ansprüche 1 bis 12, bei der die elektrische Maschine einen der folgenden Typen umfasst: Linearmaschine, Axialflussmaschine, Radialflussmaschine, Asynchronmaschine, Synchronmaschine.

14. Elektrische Maschine nach einem der Ansprüche 1 bis 13, die als Maschine mit Innenläufer oder als Maschine mit Außenläufer aufgebaut ist.

15. Elektrische Maschine nach einem der Ansprüche 1 bis 14, bei der der Rotor von einem der folgenden Typen ist:

    Käfigläufer, Mehrschichtrotor im Falle der Asynchronmaschine oder im Falle der Synchronmaschine Permanentmagnetrotor, Rotor mit vergrabenen Magneten oder ein elektrisch gespeister Rotor, insbesondere Vollpolrotor, Schenkelpolrotor, Heteropolar-Rotor, Homopolar-Rotor.

## Claims

1. Electrical machine

   - which comprises a stator (7) which has slots (1, 2) for accommodating electrical windings (+A, -A), and
   - a rotor (8) which can move relative to the stator (7),
   - in which, during operation, an operating wave of the magnetomotive force is different from a fundamental wave of the magnetic flux, **characterized in that** a mechanical barrier for the fundamental wave of the magnetic flux is provided in at least one section of the stator, with the mechanical barrier being formed in such a way that the fundamental wave is attenuated while the operating wave remains substantially uninfluenced, and with the mechanical barrier being in the form of a geometric reduction in the yoke cross section of the stator and/or in the form of an effective reduction in the yoke cross section for the flux guide in the circumferential direction.

2. Electrical machine according to Claim 1, in which the mechanical barrier comprises a slot (2) in the stator, the said slot being arranged between two regions of the stator (7), which regions are wound with coils of a common section (A, B, C) of a stator winding of the electrical machine, by means of recessing the slot (2) to a depth V2, whereas a slot (1) between regions of the stator, which regions are wound with coils of different sections, has a smaller, conventional depth V1 in comparison thereto.

3. Electrical machine according to Claim 1 or 2, in which the mechanical barrier is formed in such a way that the fundamental wave is attenuated by 50% or more in the at least one section of the stator (7).

4. Electrical machine according to Claim 1 or 2, in which the mechanical barrier is formed in such a way that, at a nominal torque, the fundamental wave is attenuated by at least 90% in the at least one section of the stator, with the operating wave being attenuated by less than 10% in this region.

5. Electrical machine according to Claim 2, in which the slot (2) is provided on a side of the stator (7) which faces the rotor (8).

6. Electrical machine according to Claim 2, in which the slot (9) is provided on a side of the stator (7) which is averted from the rotor (8).

7. Electrical machine according to either of Claims 5 and 6, in which a cooling channel (3) is made in the slot (2).

8. Electrical machine according to one of Claims 1 to 7, in which the mechanical barrier comprises a bore (6) in the stator.

9. Electrical machine according to one of Claims 1 to 8, in which the mechanical barrier comprises a laminated core (4) which comprises a different preferred direction from a laminated core of the stator.

10. Electrical machine according to one of Claims 1 to 9, in which the mechanical barrier (4') comprises a different material in the at least one section of the stator from the material of the stator outside this at least one section.

11. Electrical machine according to one of Claims 1 to 10, in which the mechanical barrier (4') comprises sintered iron or SMC, soft magnetic composites.

12. Electrical machine according to one of Claims 1 to 11, in which the ratio of the number of slots (1, 2) to the number of poles (S, N) in the rotor is 12/10 or 12/14 or in each case integer multiples of the number of slots (1, 2) and of the number of poles (S, N).

13. Electrical machine according to one of Claims 1 to 12, in which the electrical machine comprises one of the following types: linear machine, axial flow machine, radial flow machine, asynchronous machine, synchronous machine.

14. Electrical machine according to one of Claims 1 to 13, which is designed as a machine with an internal rotor or as a machine with an external rotor.

15. Electrical machine according to one of Claims 1 to 14, in which the rotor is of one of the following types: squirrel cage rotor, multilayer rotor in the case of the asynchronous machine or, in the case of the synchronous machine, permanent-magnet rotor, rotor with buried magnets or an electrically fed rotor, in particular non-salient pole rotor, salient pole rotor, heteropolar rotor, homopolar rotor.

## Revendications

1. Machine électrique qui présente :

   un stator (7) doté de rainures (1, 2) destinées à reprendre des enroulements électriques (+A, -A) et
   un rotor (8) apte à se déplacer par rapport au stator (7),
   une onde de travail de la force magnétomotrice étant en fonctionnement différente d'une onde de base du flux magnétique,

**caractérisée en ce que**

dans au moins une partie du stator, une barrière mécanique est prévue pour l'onde de base du flux magnétique,

**en ce que** la barrière mécanique est configurée de telle sorte que l'onde de base soit atténuée pendant que l'onde de travail reste essentiellement non influencé et

**en ce que** la barrière mécanique est configurée comme réduction géométrique de la section transversale de la culasse du stator et/ou comme réduction effective de la section transversale de la culasse qui guide le flux dans la direction périphérique.

2. Machine électrique selon la revendication 1, dans laquelle la barrière mécanique comprend une rainure (2) ménagée dans le stator et disposée entre deux parties du stator (7) sur lesquelles sont enroulés des enroulements d'un barreau (A, B, C) commun d'un enroulement de stator de la machine électrique par approfondissement de la rainure (2) jusqu'à une profondeur V2, et en revanche une rainure (1) située entre des parties du stator sur lesquelles sont enroulées des bobines de barreaux différents présente une profondeur normale V1 plus petite que l'autre.

3. Machine électrique selon les revendications 1 ou 2, dans laquelle la barrière mécanique est configurée de telle sorte que l'onde de base soit atténuée de 50 % ou davantage dans au moins une partie du stator (7).

4. Machine électrique selon les revendications 1 ou 2, dans laquelle la barrière mécanique est configurée de telle sorte que pour le couple de rotation nominal, l'onde de base soit atténuée d'au moins 90 % dans la ou les parties du stator, l'onde de travail étant atténuée de moins de 10 % dans cette plage.

5. Machine électrique selon la revendication 2, dans laquelle la rainure (2) est prévue sur un côté du stator (7) tourné vers le rotor (8).

6. Machine électrique selon la revendication 2, dans laquelle la rainure (9) est prévue sur un côté du stator (7) non tourné vers le rotor (8).

7. Machine électrique selon l'une des revendications 5 et 6, dans laquelle un canal de refroidissement (3) est ménagé dans la rainure (2).

8. Machine électrique selon l'une des revendications 1 à 7, dans laquelle la barrière mécanique comporte un alésage (6) ménagé dans le stator.

9. Machine électrique selon l'une des revendications 1 à 8, dans laquelle la barrière mécanique comporte un empilement de tôles (4) dont la direction préférentielle est différente de celle d'un empilement de tôles du stator.

10. Machine électrique selon l'une des revendications 1 à 9, dans laquelle la barrière mécanique (4') comporte dans au moins une partie du stator un matériau différent du matériau du stator à l'extérieur de cette ou de ces parties.

11. Machine électrique selon l'une des revendications 1 à 10, dans laquelle la barrière mécanique (4') comporte du fer fritté ou des composites magnétiques doux SMC.

12. Machine électrique selon l'une des revendications 1 à 11, dans laquelle le rapport entre le nombre des rainures (1, 2) et le nombre des pôles (S, N) dans le rotor est de 12/10 ou de 12/14 ou représente chaque fois un multiple entier du nombre des rainures (1, 2) et du nombre des pôles (S, N).

13. Machine électrique selon l'une des revendications 1 à 12, dans laquelle la machine électrique comporte un des types suivants : machine linéaire, machine à flux axial, machine à flux radial, machine asynchrone et machine synchrone.

14. Machine électrique selon l'une des revendications 1 à 13, configurée comme machine à induit intérieur ou comme machine à induit extérieur.

15. Machine électrique selon l'une des revendications 1 à 14, dans laquelle le rotor est un des types suivants : induit à cage, rotor multicouche dans le cas d'une machine asynchrone ou rotor à aimant permanent dans le cas d'une machine synchrone, rotor à aimants creusés ou rotor alimenté en électricité, en particulier rotor à pôles pleins, rotor à pôles en bras, rotor hétéropolaire et rotor homopolaire.

Fig. 1

Fig. 2

Fig. 3

Fig. 4

Fig. 5

Fig. 6

Fig. 7

## Fig. 8

## Fig. 9

## Fig. 10

## Fig. 11

## Fig. 12

Winkelposition [rad]

## Fig. 13

Fourier- Komponenten

## Fig. 14

## Fig. 15

Winkelposition [rad]

Fig. 16

Fourier - Komponenten

Fig. 17

Fourier - Komponenten

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070194650 A1
- US 6849985 B2

- US 6664696 B1